# EUROPÄISCHE PATENTSCHRIFT

(11) **EP 2 774 785 B1**
(45) Veröffentlichungstag und Bekanntmachung des Hinweises auf die Patenterteilung: **27.04.2016**
(21) Anmeldenummer: 14400012.2
(22) Anmeldetag: 28.02.2014
(51) Int. Cl.: B60D 1/06, B60D 1/52, B60R 9/06

(54) **Lastenträgerkupplung und Lastenträger**
Load bearing coupling and load bearer
Couplage de support de charge et support de charge

(30) Priorität: 07.03.2013 DE 102013004484
(43) Veröffentlichungstag der Anmeldung: 10.09.2014
(60) Teilanmeldung: 16159970.9
(73) Patentinhaber: WESTFALIA - Automotive GmbH, 33378 Rheda-Wiedenbrück (DE)
(72) Erfinder: Bachmann, Horst, 44793 Bochum (DE); Weiner, Marc, 33332 Gütersloh (DE)
(74) Vertreter: Patentanwälte Bregenzer und Reule Partnerschaftsgesellschaft mbB

(56) Entgegenhaltungen:
- EP-A1- 2 233 362
- DE-A1-102007 003 773
- DE-A1-102008 009 150
- DE-U1- 9 303 510
- DE-U1- 9 404 236

## Beschreibung

Die Erfindung betrifft eine Lastenträgerkupplung für einen Lastenträger, zum lösbaren Befestigen an einem Kuppelkörper, insbesondere einer Kupplungskugel, einer Anhängekupplung gemäß dem Oberbegriff des Anspruchs 1.

Eine derartige Lastenträgerkupplung bzw. ein damit ausgestatteter Lastenträger gehen beispielsweise aus der gattungsgemäßen DE 94 04 236 U1 hervor.

Zur Betätigung einer Lastenträgerkupplung gemäß DE 10 2008 009 150 A1, die z.B. in der Art einer Zugkugelkupplung für einen Anhänger ausgestaltet ist, dient ein Spannhebel, mit dem ein Stell-Klemmteil gegen ein ein anderes Klemmteil bildendes oder aufnehmendes Spanngehäuse verstellt wird, so dass der Kuppelkörper, z.B. eine Kupplungskugel einer üblichen Kugelkupplung für Kraftfahrzeuge, in dem Spanngehäuse geklemmt ist.

Die bekannte Lastenträgerkupplung bzw. der Lastenträger wird auf den Kugelkopf der Anhängekupplung aufgesetzt und anschließend wie eine übliche Zugkugelkupplung verriegelt. Dazu wird ein Schwenkhebel betätigt, so dass die in der Art einer Zugkugelkupplung ausgestaltete Anhängekupplung sich noch seitlich am Kugelhals abstützt. Die Handhabung ist jedoch relativ schwierig, da man nämlich zunächst die beiden Stützarme bezüglich des Kuppelkörperträgers positionieren muss, bevor die Lastenträgerkupplung verriegelbar bzw. verklemmbar ist.

Es ist daher die Aufgabe der vorliegenden Erfindung, eine bequem handhabbare Lastenträgerkupplung mit guter Abstützung an der Anhängekupplung bereitzustellen.

Zur Lösung der Aufgabe ist eine Lastenträgerkupplung gemäß der technischen Lehre des Anspruchs 1 vorgesehen.

Zur Lösung der Aufgabe ist weiterhin ein System vorgesehen, das die Lastenträgerkupplung sowie eine damit zusammenwirkende Anhängekupplung umfasst, sowie auch eine Halterung, die mit der Lastenträgerkupplung zusammenwirkt.

Ein Grundgedanke der Erfindung ist es, dass die Lastenträgerkupplung eine Abstützung auch unterhalb des Kuppelkörpers, beispielsweise einer Kupplungskugel, ermöglicht, so dass die Belastung durch den Lastenträger nicht nur auf den Kuppelkörper wirkt. Zudem besteht bei einem nur sich an der Kupplungskugel abstützenden Lastenträger auch die Gefahr, dass sich dieser relativ zur Kupplungskugel, die an sich eher zum kugelgelenkigen Lagern einer Zugkugelkupplung eines Anhängers dient, verdrehen kann, also beispielsweise sich zur Seite neigt.

Die Lastenträgerkupplung weist beispielsweise Befestigungsmittel zum Halten einer Trageinrichtung des Lastenträgers, z.B. eines Gestells auf. Die Lastenträgerkupplung kann auch einen integralen Bestandteil eines Lastenträgers bilden.

Die Lastenträgerkupplung gemäß der Erfindung und selbstverständlich auch der damit ausgestattete Lastenträger kann ohne weiteres und bequem gehandhabt werden, indem nämlich der Lastenträger zunächst am Kuppelkörper angeordnet wird und mit der Betätigung des Stell-Klemmteils zugleich auch der mindestens eine Stützvorsprung in Anlagen mit dem Bereich des Kuppelkörperträgers unterhalb des Kuppelkörpers gebracht wird.

Die Abstützung kann selbstverständlich direkt an dem Kuppelkörperträger erfolgen. Zweckmäßigerweise sind am Kuppelkörperträger Stützkonturen oder Gegenkonturen vorgesehen, die direkt mit der Lastenträgerkupplung gemäß der Erfindung bzw. deren Stützvorsprung oder Stützvorsprüngen zusammen wirken. Beispielsweise sind Haken, Ösen, Vertiefungen, Vorsprünge oder dergleichen andere formschlüssigen Halt bietende Gegenkonturen am Kuppelkörperträger vorgesehen.

Eine Variante der Erfindung kann aber auch vorsehen, dass beispielsweise eine Halterung an dem Kuppelkörperträger lösbar befestigbar ist, so dass ein an sich nicht für den Betrieb mit der erfindungsgemäßen Lastenträgerkupplung vorgesehener Kuppelkörperträger sozusagen aufgerüstet oder umgerüstet werden kann. An der Halterung befindet sich beispielsweise eine Gegenformschlusskontur oder mehrere Gegen-Formschlusskonturen zur Zusammenwirkung mit dem mindestens einen Stützvorsprung oder den Stützvorsprüngen.

Die Halterung ist zweckmäßigerweise lösbar an der Anhängekupplung bzw. deren Kuppelkörperträger befestigbar. Beispielsweise kann die Halterung in der Art eines Ringes oder einer Manschette ausgestaltet sein. Die Halterung kann auch verspannt, verschraubt oder verklemmt werden, wozu beispielsweise Klemmmittel, zum Beispiel eine Klemmschraube oder mehrere Klemmschrauben, mindestens ein Klemmkeil oder dergleichen vorgesehen sind. Beispielsweise umfasst die Halterung zwei oder mehrere Ringsegmente, von denen mindestens eines gegenüber mindestens einem anderen Ringsegment beweglich ist, so dass die Halterung in einer Offenstellung vom Kuppelkörperträger entfernt bzw. an diesem angebracht werden kann, in einer Schließstellung jedoch den Kuppelkörperträger vorzugsweise ringförmig umschließt.

Eine andere Variante der Erfindung sieht vor, dass direkt an der Anhängekupplung eine oder mehrere Gegen-Formschlusskonturen, Stützkonturen oder dergleichen zur Zusammenwirkung mit der Lastenträgerkupplung vorgesehen sind. Beispielsweise können eine oder mehrere Ausfräsungen, beispielsweise kugelförmige Ausfräsungen (Kugelkalotten), Bohrungen etc., am Kuppelkörperträger vorgesehen sein, damit der mindestens eine Stützvorsprung einen sicheren Halt am Kuppelkörperträger findet.

Zweckmäßigerweise wirkt der mindestens eine Stützvorsprung über eine Schrägflächenanordnung mit dem Kuppelkörperträger zusammen. Beispielsweise sind eine oder mehrere Schrägflächen an dem mindestens einen Stützvorsprung vorgesehen, die mit einer entsprechenden Gegenkontur am Kuppelkörperträger zusammen wirken. Auch am Kuppelkörperträger und/oder an der oben genannten Halterung, die lösbar am Kuppelkörperträger anordenbar ist, können eine oder mehrere Schrägflächen vorgesehen sein. Anhand der Schrägflächenanordnung kann eine Verspannung oder Verklemmung der Lastenträgerkupplung mit der Anhängekupplung hergestellt werden. Beispielsweise sorgt die Schrägflächenanordnung für eine Verspannung des Kuppelkörpers mit oder in dem Aufnahmeraum der Lastenträgerkupplung.

Die Kupplungsbasis weist zweckmäßigerweise ein Gehäuse auf, an dem das mindestens eine Stell-Klemmteil der Lastenträgerkupplung beweglich gelagert ist und das einen Aufnahmeraum für den Kuppelkörper aufweist. Beispielsweise ist das Gehäuse mit mindestens einer Kugelkontur oder einem im Wesentlichen kugelförmigen Innenraum ausgestattet, in den der Kuppelkörper hinein beweglich ist. Somit kann also beispielsweise das Gehäuse auf den Kuppelkörper aufgesetzt werden und dann verschlossen, in dem das mindestens eine Stell-Klemmteil in die Klemmstellung gebracht wird.

An dieser Stelle sei aber auch bemerkt, dass eine Gehäuse-Lösung nicht unbedingt notwendig ist. Es können auch beispielsweise in der Art von Armen ausgestaltete ortsfeste Klemmteile (oder nur ein Klemmteil) vorgesehen sein, gegenüber dem oder denen das mindestens eine Stell-Klemmteil beweglich ist.

Das Gehäuse kann mindestens ein Klemmteil aufweisen, das ortsfest am Gehäuse angeordnet ist oder durch das Gehäuse gebildet ist. Beispielsweise kann eine kugelförmige oder kugelkalottenförmige Aufnahme als Klemmteil vorgesehen sein.

Die Kupplungsbasis weist zweckmäßigerweise ein Klemmteil oder mehrere Klemmteile auf, das oder die gegenüber der Kupplungsbasis beweglich ist oder sind und einen Stützvorsprung zum Abstützen an dem Kuppelkörperträger aufweist oder aufweisen. Beispielsweise kann ein derartiger Stützvorsprung an dem vorgenannten Gehäuse der Kupplungsbasis vorgesehen sein. Es ist aber auch möglich, dass bei einem z.B. armartigen Klemmteil eines oder mehrere mit einem Stützvorsprung zum Abstützen am Kuppelkörperträger ausgestattet sind.

Eine möglichst günstige Abstützung der Lastenträgerkupplung an der Anhängekupplung lässt sich ohne weiteres dadurch erzielen, dass die Lastenträgerkupplung mindestens 3 Stützvorsprünge zum Abstützen an einem Außenumfang des Kuppelkörperträgers aufweist, wobei die Stützvorsprüngen in einem Winkelabstand zueinander angeordnet sind. Beispielsweise ist der Winkelabstand zwischen den Stützvorsprüngen möglichst gleich, so dass beispielsweise eine Art Dreibein-Abstützung gegeben ist. Dadurch lässt sich eine besonders stabile positionierung des Lastenträgers bzw. der Lastenträgerkupplung an der Anhängekupplung erzielen.

Es ist zum Beispiel möglich, dass zwei Stützvorsprünge bezüglich der Kupplungsbasis ortsfest sind, während ein dritter Stützvorsprung an dem mindestens einen Stell-Klemmteil angeordnet ist oder mit dem Stell-Klemmteil bewegungsgekoppelt ist.

An dieser Stelle sei bemerkt, dass selbstverständlich mehrere Stell-Klemmteile vorgesehen sein können, die zweckmäßigerweise mit einem einzigen Bedienelement betätigbar sind. Beispielsweise kann eine Art Greifer gebildet sein, der zwei oder mehrere Stell-Klemmteile umfasst.

Weiterhin ist es ohne weiteres möglich, dass ein Stel-Klemmteil mehrere Stützvorsprünge aufweist, beispielsweise in einem Winkelabstand zueinander angeordnete und/oder in einem Längsabstand zueinander angeordnete Stützvorsprünge. An einem Stützvorsprung können selbstverständlich auch mehrere Stützstellen vorgesehen sein, die beispielsweise in einem Winkelabstand und/oder einem Längsabstand in Anlage mit dem Kuppelkörperträger kommen, wenn sich der mindestens eine Stützvorsprung am Kuppelkörperträger in der Klemmstellung der Lastenträgerkupplung abstützt.

Eine Ausführungsform der Erfindung sieht vor, dass der mindestens eine Stützvorsprung an dem mindestens einen Stell-Klemmteil fest angeordnet ist, beispielsweise einstückig mit dem Stell-Klemmteil ist. Es ist aber auch möglich, das eine Bewegungskopplung mit dem mindestens einen Stell-Klemmteil gegeben ist, beispielsweise über ein Kniehebelgetriebe und/oder ein Zahnradgetriebe und/oder ein Keilgetriebe oder dergleichen. Auf diesem Wege ist es möglich, dass die Betätigungsbewegung des mindestens einen Stell-Klemmteils auf die Betätigungsbewegung des mindestens einen Stützvorsprungs übertragen wird. Das ist zwar nicht beim zeichnerisch dargestellten Ausführungsbeispiel der Fall, jedoch durchaus im Rahmen der Erfindung zu sehen.

Vorzugsweise sind mindestens zwei Stützvorsprünge vorgesehen, die mit dem mindestens einen Stell-Klemmteil bewegungsgekoppelt oder fest verbunden sind. So kann sich das Stell-Klemmteil beispielsweise an zwei voneinander entfernten Stellen des Kuppelkörperträgers an dem Kuppelkörperträger abstützt.

Eine bevorzugte Ausführungsform der Erfindung sieht vor, dass mindestens zwei mit dem Stell-Klemmteil bewegungsgekoppelt oder mit diesem verbundene oder ein diesem angeordnete Stützvorsprünge gabelförmig am Kuppelkörper vorbei verlaufen und in Eingriff mit Gegenkonturen am Kuppelkörperträger kommen.

Der mindestens eine durch das Stell-Klemmteil betätigte oder betätigbare Stützvorsprung wirkt zweckmäßigerweise in der Art eines Zugankers.

Eine bevorzugte Ausführungsform sieht vor, dass die Stützvorsprünge oder der mindestens eine Stützvorsprung an einem Abschnitt mit geringstem Durchmesser des Kuppelkörperträgers vorbei in Anlage mit einem Abschnitt mit größerem Durchmesser oder größerer Belastbarkeit gelangen, wenn die Stützstellung eingenommen wird.

Bevorzugt ist es, wenn ein Spannhebel zum Spannen des Stell-Klemmteils in die Klemmstellung vorgesehen ist. Dieser Spannhebel kann selbstverständlich auch auf mehrere Stell-Klemmteile wirken.

Weiterhin ist es zweckmäßig, wenn eine Stelleinrichtung zum Verstellen eines Abstands des mindestens einen Stützvorsprungs zu dem Kuppelkörperträger in der Klemmstellung des Stell-Klemmteils vorgesehen ist. Beispielsweise kann eine Justiereinrichtung, eine Schraubeinrichtung oder dergleichen vorgesehen sein, um den mindestens einen Stützvorsprung relativ zum Kuppelkörperträger zu positionieren, wenn das mindestens eine Stell-Klemmteil die Klemmstellung einnimmt. Somit ist eine Anpassung an beispielsweise unterschiedlich ausgestaltete Kuppelkörperträger möglich. Auch nach einem längeren Gebrauch können Ermüdungserscheinungen oder Verschleiß auftreten, was man durch die hier vorgeschlagene Stelleinrichtung ohne weiteres beheben kann.

Eine Variante der Erfindung kann vorsehen, dass an dem Stell-Klemmteil eine zum direkten Kontakt mit dem Kuppelkörper vorgesehene Klemmkontur vorgesehen ist, so dass das Stell-Klemmteil direkt zum Klemmen des Kuppelkörpers dient. Der mindestens eine Stützvorsprung wird simultan mit dem Stell-Klemmteil betätigt und sorgt für eine zusätzliche Abstützung unterhalb des Kuppelkörpers, nämlich am Kuppelkörperträger.

Weiterhin ist es möglich, dass das Stell-Klemmteil nicht direkt in Kontakt mit dem Kuppelkörper gelangt, sondern mit dem Kuppelkörperträger zusammenwirkt, um zusammen mit dem bezüglich der Kupplungsbasis ortsfesten oder ortsfest festlegbaren anderen Klemmteil oder den mehreren anderen Klemmteilen den Kuppelkörper zu klemmen. In diesem Fall sowie auch in Kombination mit dem oberen Fall, bei dem das Stell-Klemmteil direkt den Kuppelkörper klemmt, ist die nachfolgende Maßnahme vorteilhaft:
Der mindestens eine Stützvorsprung ist zweckmäßigerweise so ausgestaltet, dass er eine am Kuppelkörperträger unterhalb des Kuppelkörpers angeordnete Gegenkontur hintergreift oder untergreift derart, dass der Kuppelkörper in der Stützstellung des mindestens einen Stützvorsprungs zwischen den mindestens einen Stützvorsprung und eine mit der Kupplungsbasis verbundene Widerlagerkontur gespannt ist. Beispielsweise ist die Widerlagerkontur mit der Kupplungsbasis fest verbunden. Die Widerlagerkontur kann beispielsweise im Innenraum des vorgenannten Gehäuses der Kupplungsbasis angeordnet sein. Es ist aber auch möglich, dass die Widerlagerkontur an der Kupplungsbasis beweglich gelagert ist und zusammen mit dem mindestens einen Stell-Klemmteil zwischen einer Klemmstellung oder Stützstellung und einer Lösestellung beweglich ist. Somit kann sich die Lastenträgerkupplung beispielsweise in Richtung einer etwa vertikalen Achse oder der z-Achse optimal am Kuppelkörperträger bzw. der fahrzeugseitigen Anhängekupplung abstützen. Diese Abstützung kann beispielsweise entlang einer Spannachse oder Stützachse erfolgen, die im Wesentlichen vertikal verläuft, beispielsweise senkrecht oder um wenige Grad schräg geneigt.

Der mindestens eine Stützvorsprung ist so lang, dass er zur Abstützung in einem Bereich unterhalb eines genormten zylindrischen Abschnitts, der den Kuppelkörper, der in dieser Ausgestaltung vorzugsweise durch eine Kupplungskugel gebildet ist, trägt, ausgestaltet. Beispielsweise entspricht der Kuppelkörperträger im Bereich der Kupplungskugel der europäischen Richtlinie (EG-Richtlinie) 94/20 vom 30. Mai 1994. Der zylindrische Abschnitt hat einen relativ kleinen Querschnitt, während der in der Gebrauchslage der Anhängekupplung sich unterhalb des zylindrischen Abschnitts erstreckende Bereich des Kuppelkörperträgers, also derjenige Bereich, zwischen dem und der Kupplungskugel sich der zylindrische Abschnitt erstreckt, wesentlich stabiler und belastbarer ist. Hier setzt die vorteilhafte Ausgestaltung ein, d.h. der mindestens eine Stützvorsprung stützt sich nicht am genormten, relativ "schwachen" zylindrischen Abschnitt ab, sondern weiter unten am Kuppelträger.

An dem mindestens einen Stützvorsprung ist zweckmäßigerweise mindestens eine Formschlusskontur zum formschlüssigen Halt an einer an dem Kuppelkörperträger angeordneten Gegen-Formschlusskontur vorgesehen. Die Gegen-Formschlusskontur kann beispielsweise einen Bestandteil des Kuppelkörperträgers bilden, aber auch einer Halterung, beispielsweise der eingangs erwähnten Manschette, die am Kuppelkörperträger befestigbar oder befestigt ist. Auf diesem Wege wird nicht nur eine beispielsweise flächige Abstützung über eine Planfläche realisiert, sondern auch eine mehrachsige Abstützung bzw. ein formschlüssiger Halt.

Die Formschlusskontur und die zugeordnete Gegen-Formschlusskontur bilden beispielsweise eine Paarung aus Haken und Hakenaufnahme. Beispielsweise kann die Gegen-Formschlusskontur eine Hakenaufnahme sein, während die Formschlusskontur an dem mindestens einen Stützvorsprung ein Hakenvorsprung ist.

Aber auch die umgekehrte Konfiguration (Formschlusskontur an dem mindestens einen Stützvorsprung umfasst die Hakenaufnahme, die Gegen-Formschlusskontur einem Haken) ist möglich, was auch bei dem nachfolgenden Ausführungsbeispiel der Fall ist:

Eine der Formschlusskonturen, die Formschlusskontur oder die Gegen-Formschlusskontur, kann beispielsweise eine Kugeloberfläche sein, während die andere Formschlusskontur eine Kugelkalotte ist. Es ist auch möglich, dass eine Formschlusskontur einen Steckvorsprung umfasst, während die andere Formschlusskontur eine Steckaufnahme bildet. So kann beispielsweise die an dem mindestens einen Stützvorsprung angeordnete Stützkontur als Steckvorsprung oder als Steckaufnahme ausgestaltet sein.

Nachfolgend werden Ausführungsbeispiele der Erfindung erläutert. Es zeigen:
- Figur 1: eine perspektivische Schrägansicht eines ersten Ausführungsbeispiels einer an einer Anhängekupplung angekuppelten Lastenträgerkupplung, die in
- Figur 2: frontal in einer Sicht auf die Anhängekupplung dargestellt ist,
- Figur 3: einen Teil-Schnitt durch die Anordnung gemäß Figur 1, etwa entlang einer Schnittlinie A-A in Figur 1,
- Figur 4: einen Schnitt durch die Anordnung gemäß Figur 2, etwa entlang einer Schnittlinie B-B in Figur 2,
- Figur 5: eine Seitenansicht auf die Anordnung gemäß Figur 1,
- Figur 6: eine Abwandlung des Systems gemäß der vorstehenden Figuren, wobei an einem Kupplungsarm der Anhängekupplung eine Halterung zur Zusammenwirkung mit der Lastenträgerkupplung angeordnet ist,
- Figur 7: einen Schnitt durch die Anordnung gemäß Figur 6, etwa entlang einer Schnittlinie C-C in Figur 6,
- Figur 8: eine perspektivische Schrägansicht eines zweiten Ausführungsbeispiels einer an einer Anhängekupplung angekuppelten Lastenträgerkupplung,
- Figur 9: eine weitere perspektivische Schrägansicht des Systems aus Figur 8,
- Figur 10: eine Seitenansicht auf das System gemäß Figur 8 oder 9 im geöffneten Zustand,
- Figur 11: das System gemäß Figur 10 im geschlossenen Zustand,
- Figur 12: einen Schnitt durch die Anordnung gemäß Figur 9, etwa entlang einer Schnittlinie D-D in Figur 9, und
- Figur 13: eine hintere Ansicht des Systems gemäß Figuren 9 bis 12.

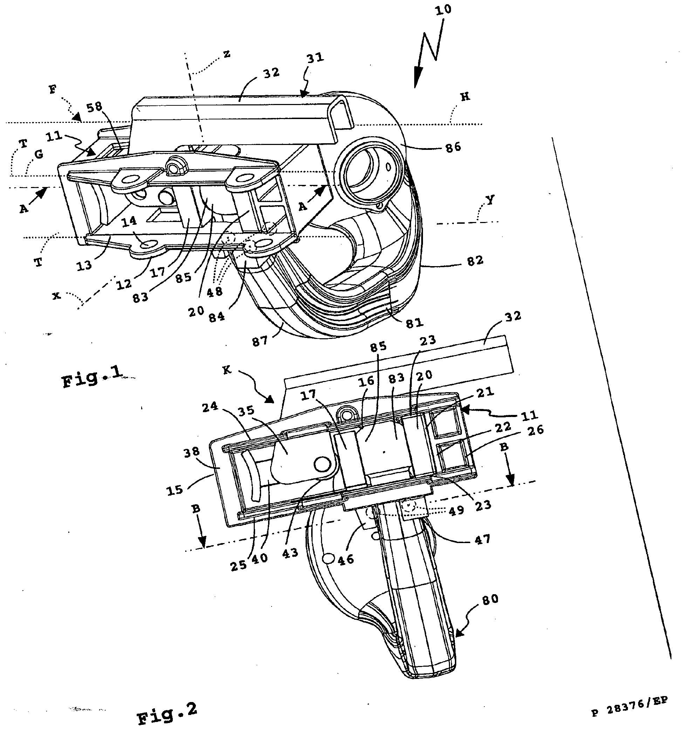

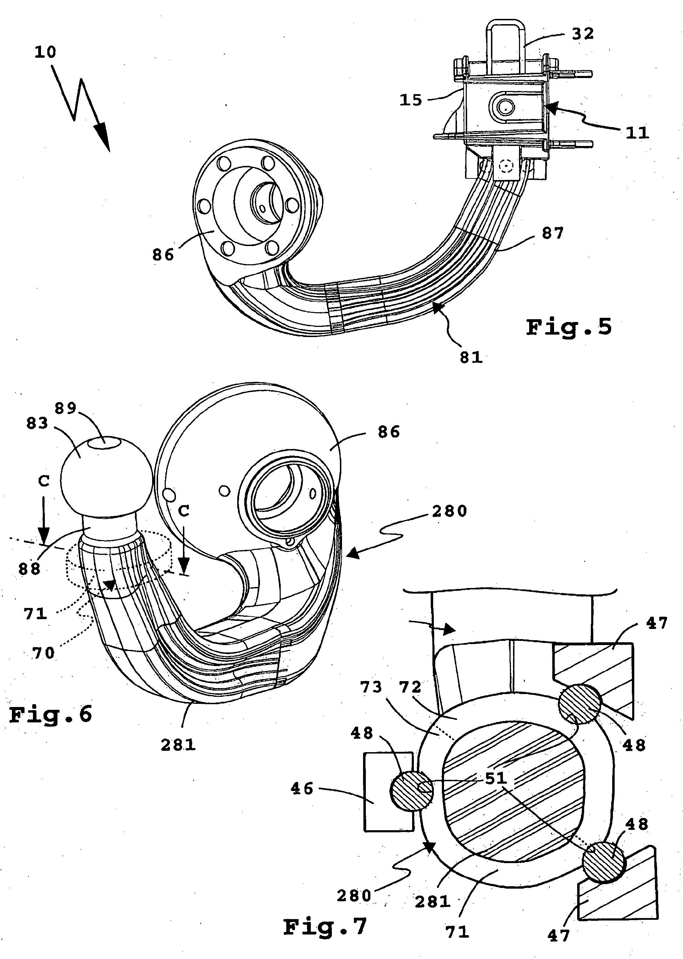

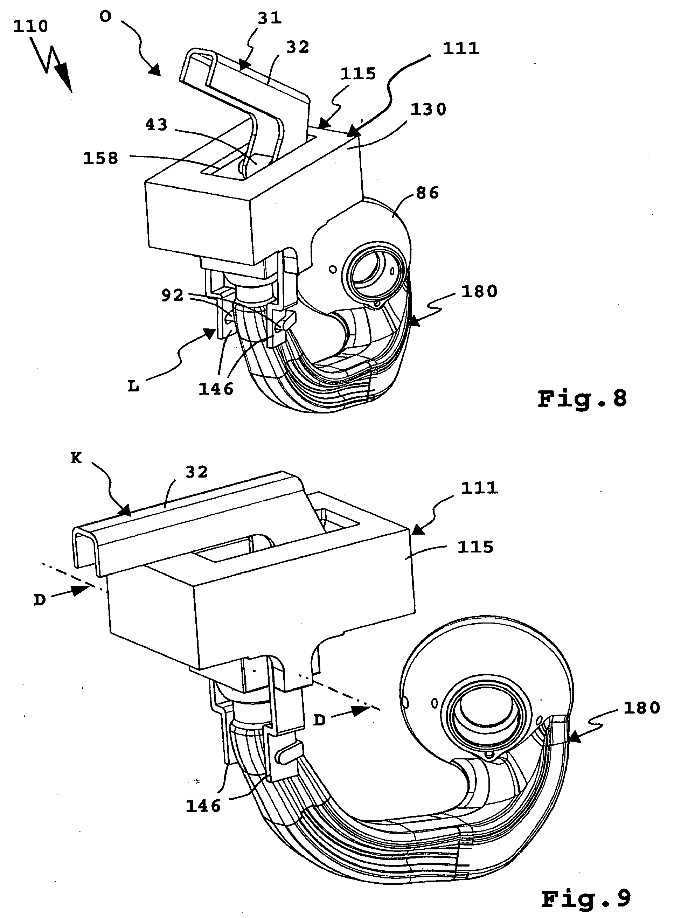

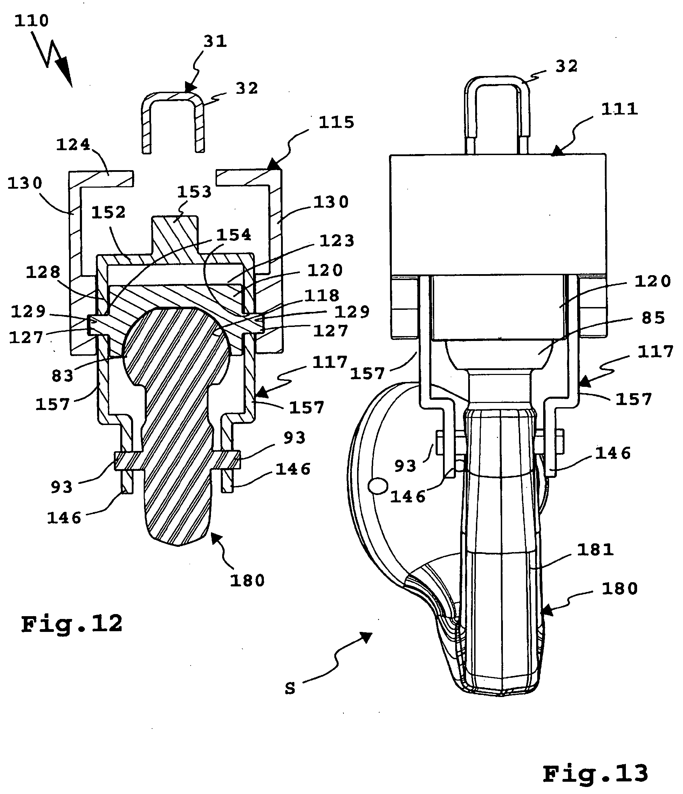

Die in den Figuren 1-5 dargestellte Lastenträgerkupplung 10 und die in den Figuren 8-13 dargestellte Lastenträgerkupplung 110 haben teilweise dieselben Komponenten, die entsprechend mit denselben Bezugsziffern versehen sind. Insoweit Abweichungen vorhanden sind, sind diese durch um 100 unterschiedliche Bezugsziffern kenntlich gemacht. Die Figuren 6 und 7 zeigen eine Abwandlung der Anhängekupplung des Ausführungsbeispiels gemäß Figuren 1 bis 5, die mit einer Halterung (70) zur Zusammenwirkung mit der Lastenträgerkupplung 10 ausgestattet ist.

Die Lastenträgerkupplungen 10, 110 dienen zur Befestigung eines schematisch angedeuteten Lastenträgers T an einem Kraftfahrzeug F, beispielsweise einem Personenkraftwagen oder dergleichen. Hinter einen schematisch angedeuteten Stoßfänger H des Kraftfahrzeugs F steht eine Anhängekupplung 80, 180, 280 nach hinten vor, wenn sie ihre Betriebsstellung, die zum Anhängen eines Anhängers geeignet ist, einnimmt. Die Anhängekupplung 80, 180, 280 umfasst einen beispielsweise fest, lösbar, insbesondere steckbar, oder beweglich am Kraftfahrzeug F gelagerten Kuppelkörperträger 81, 181, 281, zum Beispiel einen Kupplungsarm 82, sowie einen Kuppelkörper 83, der an seinem vom Kraftfahrzeug F entfernten Ende 84 des Kuppelkörperträgers 81, 181, 281 angeordnet ist

Der Kuppelkörper 83 ist beispielsweise als Kupplungskugel 85 ausgestaltet. Von einem fahrzeugseitigen Halterbereich 86, der beispielsweise ein Lagerteil zum schwenkbaren Lagern des Kupplungsarms 82 am Kraftfahrzeug F, ein Steckende oder dergleichen, umfasst, erstreckt sich ein eine oder mehrere Krümmungen aufweisender Armabschnitt 87 des Kuppelkörperträgers 81, 181, 281. Am Ende 84 läuft der Kuppelkörperträger 81, 181, 281 in einem zylindrischen Abschnitt 88 aus, an dem der Kuppelkörper 83 angeordnet ist. Im Vergleich zum relativ massiven und tragfähigen Kupplungsarm 82 bzw. zum Armabschnitt 87 ist der zylindrische Abschnitt 88 weniger belastbar. Er hat z.B. einen kleineren Querschnitt.

Wenn nun der Lastenträger T an der Anhängekupplung 80, 180, 280 befestigt wird, wirkt an sich zunächst eine wesentliche Kraft auf den Kuppelkörper 83, so dass auch der zylindrische Abschnitt 88 einer großen Belastung ausgesetzt ist. Es besteht beispielsweise die Gefahr, dass der Lastenträger T zur Seite, nach vorn oder nach hinten (in Richtung einer X-Achse oder einer Y-Achse) kippt. Die Belastung durch den Lastenträger T könnte an sich dazu führen, dass der Kuppelkörper 83 vom Kuppelkörperträger 81, 181, 281 abbricht, dass sich der zylindrische Abschnitt 88 verbiegt oder dergleichen. Zudem könnte eine ungünstige Schräglage des Lastenträgers T beim Fahrbetrieb mit dem Kraftfahrzeug auftreten, so dass ein sicherer Fahrbetrieb nicht mehr möglich ist.

Die Lastenträgerkupplungen 10 und 110 haben jeweils eine Kupplungsbasis 11, 111, an der die übrigen Bestandteile des Lastenträgers T befestigbar oder befestigt sind.

Beispielsweise sind an der Kupplungsbasis 11 Befestigungsvorsprünge 12 vorgesehen, die zum Halten eines Gestells G oder einer sonstigen Trageinrichtung des Lastenträgers T dienen. Beispielsweise begrenzen die Befestigungsvorsprünge 12 eine Aufnahme 13 für das Gestell G. An den Befestigungsvorsprüngen 12 befinden sich Durchtrittsöffnungen 14, beispielsweise zum Durchstecken von Befestigungsbolzen (nicht dargestellt), mit denen das Gestell G an der Kupplungsbasis 11 befestigbar ist. Die Befestigungsbolzen umfassen beispielsweise Nieten, Schrauben oder dergleichen. Darauf kommt es im Detail nicht an, weil beispielsweise auch jede andere Verbindung, beispielsweise Schweißen, Kleben oder dergleichen ohne weiteres möglich ist.

Beispielsweise ist die Kupplungsbasis 111 der Lastenträgerkupplung 110 nur schematisch dargestellt bzw. hat glatte Außenwände, an denen das nicht dargestellte Gestell G des Lastenträgers T auch befestigbar ist, beispielsweise durch eine Klebeverbindung. An dieser Stelle sei bemerkt, dass beispielsweise das Gestell G einen Bestandteil der jeweiligen Kupplungsbasis 11 oder 111 bilden könnte bzw. dass auch ein Gestell eines Lastenträgers T, beispielsweise eine Plattform oder dergleichen, eine Kupplungsbasis einer erfindungsgemäßen Lastenträgerkupplung darstellen kann.

Die Kupplungsbasis 11, 111 umfasst ein Gehäuse 15, 115, in welchem ein Aufnahmeraum 16 für den Kuppelkörper 83, beispielsweise die Kupplungskugel 85, vorgesehen ist. Das Gehäuse 15, 115 ist mit dem Lastenträger T bzw. dessen Gestell verbindbar bzw. an diesem anordenbar.

An den Gehäusen 15, 115 sind Stell-Klemmteile 17, 117 beweglich gelagert, beispielsweise schwenkbeweglich, schiebebeweglich oder beides, d.h. schwenk-/schiebebeweglich. Die Stell-Klemmteile 17, 117 können zwischen einer Offenstellung O, in der sie von einer Widerlagerkontur 18, 118 im Aufnahmeraum 16 weiter entfernt sind und einer Klemmstellung K verstellt werden, in der die Stell-Klemmteile 17, 117 näher an die Widerlagerkontur 18, 118 hin verstellt sind derart, dass sie den Kuppelkörper 83 zwischen ihre Klemmkontur 19, 119 und die Widerlagerkontur 18, 118 klemmen. Die Widerlagerkontur 18, 118 bildet einen Bestandteil eines bezüglich der Kupplungsbasis 11, 111 ortsfesten Klemmteils 20, 120.

Die Stell-Klemmteile 17, 117 und die ortsfesten Klemmteile 20, 120 sind Bestandteile von Klemmeinrichtungen 65; 165.

Die Widerlagerkonturen 18, 118 sind kugelmantelförmig bzw. kalottenartig ausgestaltet, d.h. sie liegen flächig an der ebenfalls kugeligen Oberfläche der Kupplungskugel 85 oder des Kuppelkörpers 83 an.

Die Klemmkontur 19 ist kugelmantelförmig bzw. kalottenartig, so dass sie zu einer flächigen Anlage am Kuppelkörper 83 geeignet ist. Die optimierte Gestalt der Klemmkonturen 19 und der Widerlagerkonturen 18, 118 ist jedoch nicht notwendig, sondern nur zweckmäßig.

An dieser Stelle sei nämlich bemerkt, dass bei einem anders ausgestalteten Kuppelkörper, der beispielsweise einen polygonalen Außenumfang hat, jedenfalls nicht kugelförmig ist, entsprechend andere Klemmkonturen an den Klemmteilen einer erfindungsgemäßen Lastenträgerkupplung möglich sind.

Das Klemmteil 20 und das Stell-Klemmteil 17 sind zum direkten Klemmen des Kuppelkörpers 83 vorgesehen. Mithin ist der Kuppelkörper 83 also in der Klemmstellung K zwischen die beiden Klemmteile 17 und 20 geklemmt.

Das Klemmteil 20 und das Stell-Klemmteil 17 sind in der Art von Halbschalen ausgestaltet, die einander gegenüberliegen und somit von entgegengesetzten Seiten her auf den Kuppelkörper 83 einwirken, wenn sie die Klemmstellung K einnehmen.

Das Klemmteil 120 ist zum direkten Kontakt mit dem Kuppelkörper 83 ausgestaltet. Das Stell-Klemmteil 117 hingegen gelangt nicht in direkten Kontakt mit dem Kuppelkörper 83, sondern wirkt im Sinne eines Spannens oder Klemmens mit dem bezüglich der Kupplungsbasis 111 ortsfesten Klemmteil 120 zusammen

Die Klemmteile 20, 120 sind im Innenraum der Gehäuse 15, 115 angeordnet. Sie begrenzen jeweils den Aufnahmeraum 16 für den Kuppelkörper 83.

Beispielsweise ist das Klemmteil 20 mit seiner Rückseite 21 an einer Seitenwand 22 des Gehäuses 15 angeordnet. Obere und untere Schmalseiten 23 des Klemmteils 20 liegen an einer oberen Wand 24 und einer unteren Wand 25 des Gehäuses 15 an. Beispielsweise ist die Verbindung mittels einer Verschweißung, Verklebung oder dergleichen hergestellt. An dieser Stelle sei bemerkt, dass ein Gehäuse in der Art des Gehäuses 15 auch ein Klemmteil bzw. auch eine Widerlagerkontur integral aufweisen kann. So könnte beispielsweise die Widerlagerkontur 18 an der Seitenwand 22 angeordnet sein.

Die Seitenwand 22 ist zweckmäßigerweise durch eine Hohlkammerstruktur 26 oder Rippenstruktur verstärkt, so dass sie einerseits leicht, andererseits sehr steif und belastbar ist.

Das Klemmteil 120 hat seitliche Vorsprünge 127 an seinen Schmalseiten 128, die in korrespondierende Ausnehmungen 129 an den Seitenwänden 130 des Gehäuses 115 eingreifen und dort gehalten sind. Eine seitliche Aufhängung bzw. Fixierung des Klemmteils 120 im Gehäuse 115 reicht aus. Zwischen einer Oberseite 123 des Klemmteils 120 und einer oberen Wand 124 des Gehäuses 115 ist beispielsweise ein Abstand vorhanden, wobei dies nicht notwendig ist, sondern nur optional.

Die Widerlagerkontur 118 ist dazu vorgesehen, von der Oberseite her auf den Kuppelkörper 83 her einzuwirken.

Die Lastenträgerkupplungen 10, 110 umfassen Betätigungselemente 31, mit denen die Stell-Klemmteile 17 und 117 betätigbar sind. An dieser Stelle sei bemerkt, dass man selbstverständlich ein Stell-Klemmteil auch direkt betätigen kann, d.h. dass eine entsprechende Betätigungshandhabe auch einen Bestandteil eines jeweiligen Stell-Klemmteils bilden kann. Beispielsweise kann an einem solchen Stell-Klemmteil ein Betätigungsvorsprung, insbesondere ein Hebel oder dergleichen, vorgesehen sein.

Die Betätigungselemente 31 umfassen einen Hebel 32, der von einem Bediener ergriffen werden kann der Hebel 32 hat beispielsweise einen Handgriff 33. Der Hebel 32 ist um eine Schwenkachse 37 eines Schwenklagers 34 schwenkbar bezüglich des Gehäuses 15, 115 gelagert. Beispielsweise wird ein Lagerabschnitt 35 des Hebels 32 von einem Achselement 36 durchdrungen, dass bezüglich des Gehäuses 15, 115 ortsfest festgelegt ist. Selbstverständlich kann das Achselement 36 auch drehbar bzw. schwenkbar sein, d.h. es könnte einen Bestandteil des Hebels 32 bilden.

Der Hebel 32 durchgreift eine Ausnehmung 58, 158 an der oberen Wand 24, 124 des Gehäuses 115, 115.

Bei der Lastenträgerkupplung 10 ist eine Nachstellung vorgesehen, d.h. dass die Schwenkachse 37 sozusagen innerhalb des Gehäuses 15 beweglich ist, so dass eine dauerhafte und auch nach Verschleiß funktionierende Verspannung des Kuppelkörpers 83 gewährleistet ist. An einer der Seitenwand 22 entgegengesetzt angeordneten Seitenwand 38 des Gehäuses 15 stützt sich ein Federelement 39 ab. Das Federelement 39 hat eine Wölbung und ist federnd nachgiebig derart, dass es ein Lagerelement 40, das das Achselement 36 hält und lagert, in Richtung des Aufnahmeraums 16 und somit in Richtung des Kuppelkörpers 83, wenn dieser sich im Aufnahmeraum 16 befindet, belasten kann. Das Lagerelement 40 umfasst beispielsweise ein Langloch 41, in welchem das Achselement 36 verschieblich aufgenommen ist. Die Längsrichtung des Langlochs 41 verläuft vom Federelement 39 weg. Die Position des Achselements 36 in dem Langloch 41 kann beispielsweise mittels einer Stellschraube oder eines anderen Stellelements verstellbar sein, beispielsweise zur Anpassung an Toleranzen oder zum Ausgleich von Verschleiß.

Anstelle des Langlochs 41 könnte auch eine das Achselement 36 fest haltende Aufnahme oder lediglich drehbar lagernde Aufnahme vorgesehen sein. Das Achselement 36 kann also auch bezüglich des Lagerelements 40 linear und/oder drehbar ortsfest sein.

Das Lagerelement 40 stützt sich mit seiner Rückseite am Federelement 39 ab. Dort ist beispielsweise eine Steckaufnahme oder sonstige Aufnahme zur Aufnahme des Lagerelements 40 vorgesehen. Ein Stützkörper 43, beispielsweise eine Rolle oder eine Walze, ist vorzugsweise drehbar an dem Hebel 32 gelagert. Es könnte aber auch an dem Hebel 32 direkt eine Gleit- oder Stützkontur vorgesehen sein.

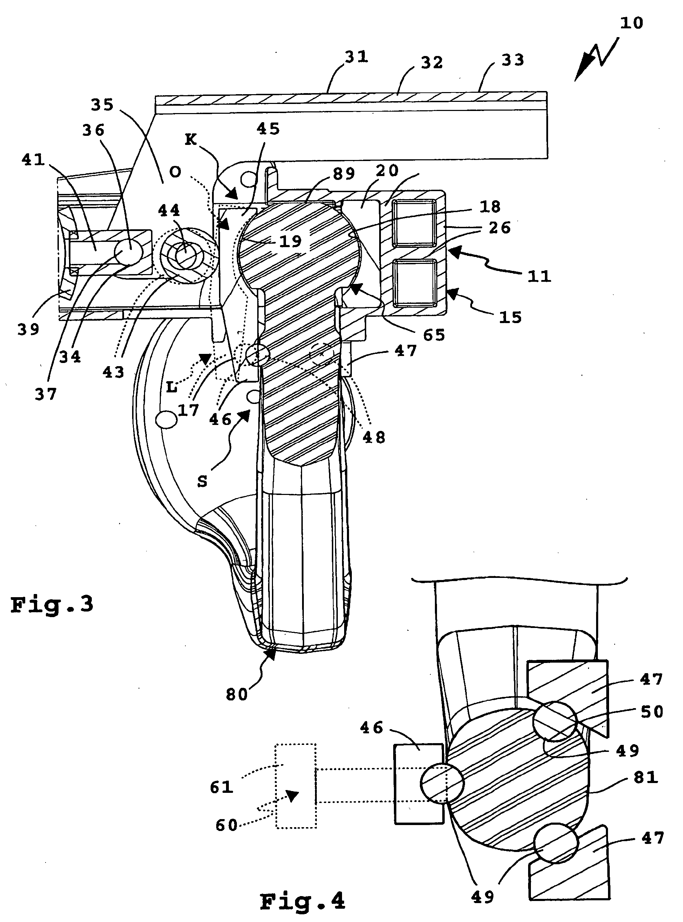

Der Stützkörper 43 ist beispielsweise mittels eines Lagerachselements 44 am Lagerabschnitt 35 des Hebels 32 gelagert. Der Stützkörper 43 stützt sich einerseits am Hebel 32 bzw. am Lagerachselement 44 und andererseits an einer Rückseite des Stell-Klemmteils 17 ab, wenn der Hebel 32 zum Gehäuse 15 hin, also in die Klemmstellung K verstellt ist. Mithin drückt also quasi der Hebel 32 über den Stützkörper 43 das Stell-Klemmteil 17 in die Klemmstellung K bzw. zum Kuppelkörper 83 hin. Das ist in durchgezogenen Linien in Figur 3 dargestellt.

Wenn der Hebel 32 jedoch vom Gehäuse 15 weggeschwenkt wird, in Figur 3 also nach schräg links oben, rollt der Stützkörper 43 nach oben und kommt eventuell sogar vom Lagerelement 40 frei, so dass das Stell-Klemmteil 17 in die in gestrichelten Linien dargestellte Schrägstellung bzw. Offenstellung O gelangen kann. Dann ist der Aufnahmeraum 16 so weit nach unten hin geöffnet, dass der Kuppelkörper 83 in den Aufnahmeraum 16 hinein gelangen kann oder auch aus diesem heraus.

Der Stützkörper 43 wirkt auf einen oberen, im Innenraum des Gehäuses 15 angeordneten Abschnitt 45 des Stell-Klemmteils 17. Von diesem Abschnitt 45 steht ein Stützvorsprung 46 nach unten, d.h. zum Kuppelkörperträger 81, 181, 281 hin ab. Weiterhin stehen vom Gehäuse 15 selbst, das heißt von der unteren Wand 25, einer oder mehrere Stützvorsprünge 47 ab. Die Stützvorsprünge 47 sind also bezüglich der Kupplungsbasis 11 ortsfest, während der Stützvorsprung 46 die Bewegung des Stell-Klemmteils 17 mitmacht.

Wenn die Lastenträgerkupplung 10 auf die Anhängekupplung 80, 280 aufgesetzt wird, wirken die ortsfesten Stützvorsprünge 47 direkt auf den Kuppelkörperträger 81 bzw. eine am Kuppelkörperträger 281 der in Figur 6, 7 dargestellten Anhängekupplung 280 angeordnete Halterung 70 ein.

Beispielsweise stützt sich die Lastenträgerkupplung 10 an einer Oberseite 89 mit ihrer oberen Wand 24 bzw. der dem Aufnahmeraum 16 zugewandten Innenseite der Wand 25 ab. Die Lastenträgerkupplung 10 findet also einerseits oben am Kuppelkörper 83 Halt, andererseits auch schon seitlich, wo nämlich die ortsfesten Stützvorsprünge 47 eine Abstützung am Kuppelkörperträger 81, 281 gewährleisten. Dadurch ist die Montage sehr einfach.

Wenn nunmehr das Betätigungselement 31 in die Klemmstellung K verstellt wird, also das Stell-Klemmteil 17 in die in Figur 3 dargestellte Klemmstellung K verstellt wird, schwenkt der Stützvorsprung 46 zum Kuppelkörperträger 81, 281 hin und nimmt eine Stützstellung S ein, so dass der Stützvorsprung 46 in Anlage mit dem Küppelkörperträger 81 oder der am Kuppelkörperträger 281 angeordneten Halterung 70 gelangt und somit gleichzeitig quasi oben und unten eine Abstützung an der Anhängerkupplung 80, 280 gegeben ist.

Eine Ausführungsform kann vorsehen, dass die Widerlagerkontur 18 und die Klemmkontur 19 den Kuppelkörper 83 mit einer hohen Klemmkraft klemmen, während weiter unten, am Kuppelkörperträger 81 nur eine mit demgegenüber geringerer Klemmkraft klemmende, jedoch durchaus belastbare Abstützung durch die Stützvorsprünge 46 und 47 vorhanden ist. Dadurch kann eine ungünstige Verspannung der Lastenträgerkupplung 10 an der Anhängekupplung 80, 280 vermieden werden: Zweckmäßigerweise kann im Bereich der Stützvorsprünge 46, 47 eine gewisse Elastizität möglich sein.

An den Stützvorsprüngen 46 und 47 sind jeweils Kugeln 48 vorgesehen, die eine Formschlusskontur 49 definieren. Als Gegen-Formschlusskonturen 50 sind am Kuppelkörperträger 81 oder der Halterung 70 Kugelkalotten 51 vorhanden. Die Kugelkalotten 51 sind in einem Winkelabstand am Außenumfang des Kuppelkörperträgers 81 oder der Halterung 70 vorgesehen. Der Winkelabstand ist vorzugsweise gleich oder zumindest etwa gleich, so dass die Formschlusskonturen 49 bzw. die Stützvorsprünge 46 und 47 etwa in Eckbereichen eines gleichseitigen Dreiecks auf den Kuppelkörperträger 81, 281 einwirken. Somit ist in jeder Richtung eine optimale Abstützung gegeben. Eine statische Überbestimmung wird durch die Abstützung an drei zueinander winkel-beabstandeten Punkten vermieden.

Es ist auch möglich, dass z.B. eine Stelleinrichtung 60 eine Anpassung an die Gegebenheiten der Anhängekupplung 80 und/oder einen Toleranzausgleich ermöglicht. Z.B. könnte an dem Stützvorsprung 46 anstelle der Kugel 48 eine Stellschraube 61 vorgesehen sein, deren freies Ende eine Formschlusskontur 49 bildet oder aufweist.

Die Gegen-Formschlusskonturen 50 sind unmittelbar am Kuppelkörperträger 81 vorgesehen. Beispielsweise umfassen die Kugelkalotten 51 entsprechende Ausfräsungen. Jedenfalls ist die Anordnung so getroffen, dass sich die Stützvorsprünge 46 und 47 unterhalb des zylindrischen, verhältnismäßig wenig belastbaren Abschnitts 88 am Kuppelkörperträger 81 abstützen, das heißt dass sie weit vor das Gehäuse 15 vorstehen. Dadurch ist die Belastung der Anhängekupplung 80 durch den Lastenträger T beim Fahrbetrieb sehr gering.

Die Ausführungsform mit Kugeln und Kugelkalotten kann selbstverständlich auch umgekehrt getroffen sein, d.h. dass beispielsweise an der Anhängekupplung 80 Kugeln und ein den Stützvorsprünge 46 und 47 korrespondierende Kugelkalotten vorgesehen sind. Weiterhin sind Kugeln und Kugelkalotten nur exemplarisch zu verstehen. Bereits eine flächige Abstützung, beispielsweise mittels Planflächen an den Stützvorsprüngen 46 und 47 würde schon eine deutliche Verbesserung gegenüber dem üblichen Verklemmen einer Kupplungskugel in der Lastenträgerkupplung darstellen.

Die in den Figuren 6 und 7 alternativ dargestellte Ausführungsform sieht vor, dass die Kugelkalotten 51 nicht direkt an der Anhängekupplung 80 angeordnet sind, sondern an der Halterung 70, die an der Anhängekupplung 280 lösbar anbringbar ist. Beispielsweise umfasst die Halterung 70 einen Ring 71. Der Ring 71 kann mehrteilig sein, zum Beispiel zweiteilig, so dass er beispielsweise zwei Ringsegmente 72, 73 hat, die voneinander weg schwenkbar sind, so dass der Kuppelkörperträger 81 in einen Innenraum des Rings 71 einführbar ist, und anschließend wieder zueinander hin schwenkbar sind, um den Kuppelkörperträger 81 ringförmig zu umschließen. Mittels einer Verklemmung (z. B. einer Klemmschraube), Verriegelung oder dergleichen, kann die Halterung 70 fest am Kuppelkörperträger 81 befestigt werden. Die Ringsegmente 72, 73 sind z.B. miteinander verschraubt und/oder verrastet.

Am Außenumfang des Rings 71 sind die Kugelkalotten 51 angeordnet. Somit kann die an sich nicht speziell für die Lastenträgerkupplung 10 vorgerüstete Anhängekupplung 280 optimal mit der Lastenträgerkupplung 10 zusammenwirken. Eine solche Adaption einer an sich vorhandenen Anhängekupplung für einen erfindungsgemäßen Lastenträger kann auch bei dem nachfolgend detailliert dargestellt zweiten Ausführungsbeispiel realisiert sein.

Bei der mit der Lastenträgerkupplung 110 zusammenwirkenden Anhängekupplung 180 sind nämlich nahe bei dem Abschnitt 88, jedoch in Entfernung zum Kuppelkörper 83, als Gegenkonturen 90, die selbstverständlich auch an einer der Halterung 70 entsprechenden Halterung angeordnet sein könnten, am Kuppelkörperträger 181 Vorsprünge 93 vorgesehen. Die Vorsprünge 93 wirken mit den beweglichen Stützvorsprüngen 146 der Lastenträgerkupplung 110 zusammen.

Von einem Grundschenkel 152 des Stell-Klemmteils 117 stehen Seitenschenkel 157 gabelförmig ab. Vor die Seitenschenkel 157 stehen die Stützvorsprünge 146 vor.

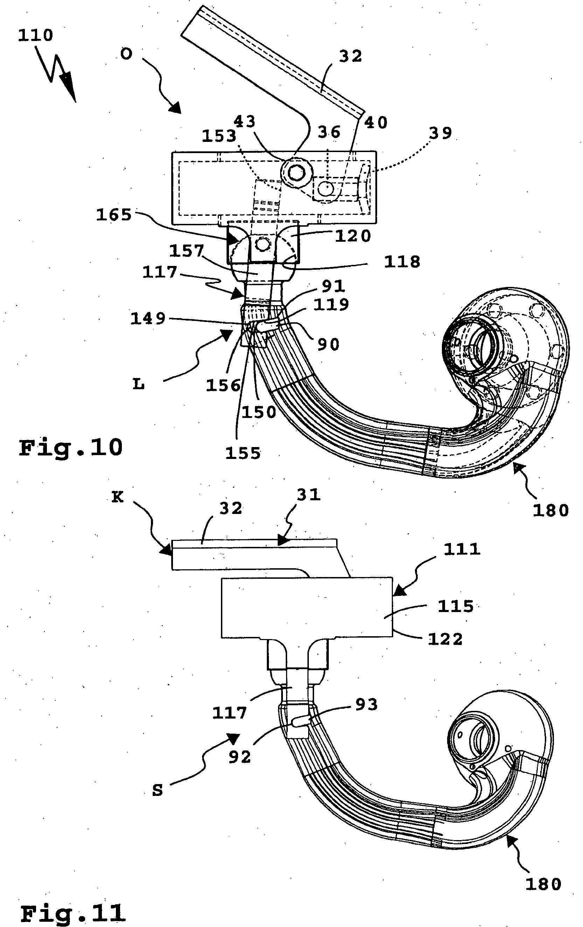

Der Grundschenkel 152 hat einen Betätigungsvorsprung 153, an dem der Stützkörper 43 des Hebels 32 abrollen kann. Wenn also der Hebel 32 von der in Figur 10 dargestellten, vom Gehäuse 115 nach oben hin weg geschwenkten Stellung (Offenstellung O) in die in Figur 11 dargestellte, zum Gehäuse 115 hin verstellte Stellung (Klemmstellung K) verschwenkt wird, rollt der Stützkörper 43 an dem Betätigungsvorsprung 153 ab, so dass das Stell-Klemmteil von der in Figur 10 beinahe eingenommen Offenstellung O, in der die Stützvorsprünge 146 eine Lösestellung L einnehmen, in die in Figur 11 dargestellte Klemmstellung K schwenkt, in der die Stützvorsprünge 146 eine Stützstellung S einnehmen. In Figur 10 ist die Lösestellung L bzw. Offenstellung O nahezu erreicht. Wenn das Stell-Klemmteil 117 noch etwas weiter (nach links in der Zeichnung) in die Lösestellung L schwenkt, gelangen die Vorsprünge 93 außer Eingriff mit den Aufnahmenuten 156.

An dieser Stelle sei bemerkt, dass das drehbare Stützelement bzw. der Stützkörper 43 eine vorteilhafte Option darstellt, d.h. dass selbstverständlich auch ein gleitverschieblicher Stützkörper anstelle des drehbaren oder rollbaren Stützkörpers 43 möglich ist. Auch die Federbelastung durch das Federelement 39 stellt nur eine zweckmäßige Option dar. Bei der Lastenträgerkupplung 110 könnte das Achselement 36 z.B. auch an den Seitenwänden 130 drehbar gelagert sein, so dass die Schwenkachse 37 ortsfest bezüglich des Gehäuses 115 ist.

Jederzeit wäre zum Beispiel auch ein Kniehebelmechanismus mit und ohne Federbelastung denkbar bzw. bei einer erfindungsgemäßen Lastenträgerkupplung auch realisierbar.

Das Stell-Klemmteil 117 ist an dem Gehäuse 115 schwenkbar gelagert. Beispielsweise durchdringen die Vorsprünge 127 Lageröffnungen 154 an den Seitenschenkeln 157. Die Seitenschenkel 157 sind also sandwichartig zwischen dem ortsfesten Klemmteil 120 und den Seitenwänden 130 des Gehäuses 115 aufgenommen, jedoch zwischen diesen beiden Bauteilen schwenkbar bzw. drehbar. Dadurch ist eine besonders günstige Krafteinleitung in das Gehäuse 115 möglich.

An dem unteren Endbereich der Stützvorsprünge 146 befinden sich Formschlusskonturen 149, die mit Gegen-Formschlusskonturen 150, nämlich den Gegenkonturen 90 zusammen wirken.

In diesem Zusammenhang sei erwähnt, dass bei erfindungsgemäß ausgestalteten Stützvorsprüngen einer Lastenträgerkupplung eine Schrägflächenanordnung zweckmäßig ist, um eine optimale Verklemmung oder Verspannung zu ermöglichen. Beispielsweise sind die Gegenkonturen 90 mit Schrägflächen 91 versehen, die von einer vom Kuppelkörper 83 entfernteren Einführseite 92 her zum Kuppelkörper 83 hin ansteigen. Korrespondierend sind die Formschlusskonturen 149 mit Schrägflächen 155 versehen. Die Schrägflächen 155 befinden sich an einer Aufnahmenut 156, die die Formschlusskonturen 149 definieren. Wenn also das Stell-Klemmteil 117 von der Offenstellung O in die Klemmstellung K schwenkt, gleiten die Schrägflächen 155, 91 aneinander entlang, was im Sinne einer Verspannung wirkt. Dadurch wird nämlich die Klemmkontur 119 zum Kuppelkörper 83 hin beaufschlagt, sozusagen von oben her auf die Kupplungskugel 85 gezogen, so dass sich die ganze Konfiguration optimal an der Anhängekupplung 180 abstützt. Eine der Schrägflächen 155, 91 ist ausreichend. Die jeweilige Gegenkontur zu einer der Schrägflächen 155, 91 muss nicht schräg verlaufen.

Auch hier ist die Handhabung sehr einfach, weil nämlich die noch gelöste (Figur 10) Lastenträgerkupplung 110 von oben her auf die Anhängekupplung 180 aufgesetzt und anschließend geklemmt bzw. verspannt werden kann.

Die gabelförmig nach unten vor das Klemmteil 120 oder das Gehäuse 115 vorstehenden Stützvorsprünge 146 hintergreifen bzw. untergreifen die Gegenkontur 90 an den entsprechenden Vorsprüngen 93 der Anhängekupplung 180, so dass sie das Gehäuse 115 oder das Klemmteil 120 gegen den Kuppelkörper 83 spannen.

Die Seitenschenkel 157 wirken in der Art von Zugankern.

Die Aufnahmenuten 156 bilden z.B. Hakenaufnahmen.

## Patentansprüche

1. Lastenträgerkupplung (10; 110) für einen Lastenträger (T), zum lösbaren Befestigen an einem Kuppelkörper (83), insbesondere einer Kupplungskugel (85), einer Anhängekupplung (80; 280; 180) eines Kraftfahrzeugs (F), mit einer Kupplungsbasis (11; 111) und einer Klemmeinrichtung (65; 165), die mindestens zwei Klemmteile zum Klemmen des Kuppelkörpers (83) umfasst, von denen mindestens eines ein Stell-Klemmteil (17; 117) bildet, das mit einem insbesondere einen Handgriff (33) aufweisenden Betätigungselement (31) zwischen einer zum Einbringen des Kuppelkörpers in einen von mindestens einem der Klemmteile (20; 120) begrenzten Aufnahmeraum (16) vorgesehenen und von mindestens einem anderen der Klemmteile (20; 120) entfernteren Offenstellung (O) und einer den Kuppelkörper in dem Aufnahmeraum (16) klemmenden Klemmstellung (K) bewegbar ist, wobei die Lastenträgerkupplung (10; 110) mindestens einen Stützvorsprung (46; 146) zum Abstützen an einem den Kuppelkörper (83) tragenden Kuppelkörperträger (81; 181) aufweist, wobei der mindestens eine Stützvorsprung (46; 146) mit dem mindestens einen Stell-Klemmteil (17; 117) bewegungsgekoppelt oder fest verbunden ist derart, dass das Stell-Klemmteil (17; 117) den mindestens einen Stützvorsprung (46; 146) bei seiner Betätigung in die Klemmstellung (K) in eine Stützstellung (S), in der sich der Stützvorsprung (46; 146) an dem Kuppelkörperträger (81; 181) abstützt, und bei einer Betätigung in die Offenstellung (O) in eine Lösestellung (L) verstellt, in der der mindestens eine Stützvorsprung (46; 146) von dem Kuppelkörperträger (81; 181) wegbewegt ist, so dass die Lastenträgerkupplung (10; 110) von der Anhängekupplung (80; 280; 180) entfernbar ist, **dadurch gekennzeichnet, dass** der mindestens eine Stützvorsprung (46; 146) eine zur Abstützung an dem Kuppelkörperträger (81; 181) unterhalb eines genormten zylindrischen Abschnitts (88) ausgebildete Länge aufweist, wobei Abschnitt (88) den als Kupplungskugel (85) ausgestalteten Kuppelkörper (83) trägt.

2. Lastenträgerkupplung nach Anspruch 1, **dadurch gekennzeichnet, dass** die Kupplungsbasis (11; 111) ein Gehäuse (15; 115) umfasst, an dem das mindestens eine Stell-Klemmteil (17; 117) der Lastenträgerkupplung (10; 110) beweglich gelagert ist und das einen Aufnahmeraum (16) für den Kuppelkörper (83) aufweist.

3. Lastenträgerkupplung nach Anspruch 1 oder 2, **dadurch gekennzeichnet, dass** an dem Gehäuse (15; 115) mindestens ein Klemmteil (20; 120) ortsfest angeordnet ist oder dass das Gehäuse (15; 115) ein Klemmteil (20; 120) bildet.

4. Lastenträgerkupplung nach einem der vorhergehenden Ansprüche, **dadurch gekennzeichnet, dass** die Kupplungsbasis (11; 111) mindestens ein Klemmteil (20; 120) umfasst, das gegenüber der Kupplungsbasis (11; 111) unbeweglich ist und einen Stützvorsprung (47) zum Abstützen an dem Kuppelkörperträger (81; 181) aufweist.

5. Lastenträgerkupplung nach einem der vorhergehenden Ansprüche, **dadurch gekennzeichnet, dass** sie mindestens drei in einem Winkelabstand zueinander angeordnete Stützvorsprünge (46, 47; 146) zum Abstützen an einem Außenumfang des Kuppelkörperträgers (81; 181) aufweist und/oder dass sie mindestens zwei Stützvorsprünge (146) aufweist, die mit dem mindestens einen Stell-Klemmteil (17; 117) bewegungsgekoppelt oder fest verbunden sind.

6. Lastenträgerkupplung nach einem der vorhergehenden Ansprüche, **dadurch gekennzeichnet, dass** sie einen Hebel (32) zum Spannen des Stell-Klemmteils (17; 117) in die Klemmstellung (K) und/oder ein Getriebe, insbesondere ein Hebelgetriebe oder ein Rollengetriebe, zur Übertragung einer Bewegung des Stell-Klemmteils (17; 117) zwischen der Klemmstellung (K) und der Offenstellung (O) auf den mindestens einen Stützvorsprung (46; 146) aufweist.

7. Lastenträgerkupplung nach einem der vorhergehenden Ansprüche, **dadurch gekennzeichnet, dass** eine Stelleinrichtung (60) zum Verstellen eines Abstands des mindestens eine Stützvorsprungs (46; 146) zu dem Kuppelkörperträger (81; 181) in der Klemmstellung (K) des Stell-Klemmteils (17; 117) aufweist.

8. Lastenträgerkupplung nach einem der vorhergehenden Ansprüche, **dadurch gekennzeichnet, dass** der mindestens eine Stützvorsprung (46; 146) eine am Kuppelkörperträger (81; 181) unterhalb des Kuppelkörpers (83) angeordnete Gegenkontur (90) hintergreift oder untergreift derart, dass der Kuppelkörper (83) in der Stützstellung (S) des mindestens einen Stützvorsprungs (46; 146) zwischen den mindestens einen Stützvorsprung (46; 146) und eine mit der Kupplungsbasis (11; 111) insbesondere fest verbundenen Widerlagerkontur (18) gespannt ist.

9. Lastenträgerkupplung nach einem der vorhergehenden Ansprüche, **dadurch gekennzeichnet, dass** das Stell-Klemmteil (17; 117) eine Klemmkontur (19) zum Kontakt mit dem Kuppelkörper (83) und zum Klemmen des Kuppelkörpers (83) aufweist.

10. Lastenträgerkupplung nach einem der vorhergehenden Ansprüche, **dadurch gekennzeichnet, dass** an dem mindestens einen Stützvorsprung (46; 146) mindestens eine Formschlusskontur (49; 149) zum formschlüssigen Halt an einer an dem Kuppelträger angeordneten Gegen-Formschlusskontur (50; 150) angeordnet ist.

11. Lastenträgerkupplung nach einem der vorhergehenden Ansprüche, **dadurch gekennzeichnet, dass** die mindestens eine Formschlusskontur (49; 149) und die zugeordnete Gegen-Formschlusskontur (50; 150) eine Paarung aus Haken und Hakenaufnahme und/oder eine Kugeloberfläche und eine Kugelkalotte (51) und/oder einen Steckvorsprung und eine Steckaufnahme bilden oder umfassen.

12. Lastenträgerkupplung nach einem der vorhergehenden Ansprüche, **dadurch gekennzeichnet, dass** die Gegen-Formschlusskontur (50; 150) an einer lösbar an dem Kuppelkörperträger (81; 181) angeordneten Halterung (70) angeordnet ist.

13. Halterung (70) mit mindestens einer Gegen-Formschlusskontur (50; 150) zur Zusammenwirkung mit einer Lastenträgerkupplung (10; 110) gemäß einem der Ansprüche 1 bis 10, wobei die Halterung (70) lösbar an einem Kuppelkörperträger (81; 181) einer Anhängekupplung (80; 280; 180) befestigbar ist.

14. System umfassend eine Lastenträgerkupplung (10; 110) nach einem der Ansprüche 1 bis 12 und eine Anhängekupplung (80; 280; 180), wobei die Anhängekupplung (80; 280; 180) einen Kuppelkörper (83) und einen Kuppelkörperträger (81; 181) aufweist, wobei an dem Kuppelkörperträger (81; 181) mindestens eine Stützkontur, insbesondere eine Gegen-Formschlusskontur (50; 150), zur Zusammenwirkung mit der Lastenträgerkupplung (10; 110) vorhanden ist.

15. Lastenträger mit einer Lastenträgerkupplung (10; 110) nach einem der Ansprüche 1 bis 12.

## Claims

1. Load carrier coupling (10; 110) for a load carrier (T), for releasable fastening to a coupling body (83), in particular a coupling ball (85), of a trailer coupling (80; 280; 180) of a motor vehicle (F), with a coupling base (11; 111) and a gripping device (65; 165) comprising at least two gripping parts for gripping the coupling body (83), at least one of which forms an actuating gripping part (17; 117) which is movable by an actuating element (31), in particular having a handle (33), between an open position (O) provided for bringing the coupling body into a storage space (16) bounded by at least one of the gripping parts (20; 120) and further removed from at least one of the other gripping parts (20; 120), and a gripping position (K) gripping the coupling body in the storage space (16), wherein the load carrier coupling (10; 110) has at least one support projection (46; 146) for support on a coupling body member (81; 181) carrying the coupling body (83), wherein the support projection or projections (46; 146) is or are movement-coupled or firmly connected to the actuating gripping part or parts (17; 117) in such a way that the actuating gripping part (17; 117) shifts the support projection or projections (46; 146) during its operation into the gripping position (K) into a support position (S) in which the support projection (46; 146) rests on the coupling body member (81; 181), and during its operation into the open position (O) shifts it into a release position (L) in which the support projection or projections (46; 146) is or are moved away from the coupling body member (81; 181), so that the load carrier coupling (10; 110) may be removed from the trailer coupling (80; 280; 180), **characterised in that** the support projection or projections (46; 146) has or have a length designed for support on the coupling body member (81; 181) below a standardised cylindrical section (88), wherein this section (88) carries the coupling body (83) in the form of a coupling ball (85).

2. Load carrier coupling according to claim 1, **characterised in that** the coupling base (11; 111) includes a casing (15; 115) on which the actuating gripping part or parts (17; 117) of the load carrier coupling (10; 110) is or are movably mounted and has or have a storage space (16) for the coupling body (83).

3. Load carrier coupling according to claim 1 or 2, **characterised in that** at least one gripping part (20; 120) is mounted immovably on the casing (15; 115), or that the casing (15; 115) forms a gripping part (20; 120).

4. Load carrier coupling according to any of the preceding claims, **characterised in that** the coupling base (11; 111) includes at least one gripping part (20; 120) which is immovable relative to the coupling base (11; 111) and has a support projection (47) for support on the coupling body member (81; 181).

5. Load carrier coupling according to any of the preceding claims, **characterised in that** it has at least three support projection (46, 47; 146) arranged with angular clearance from one another for support on an outer periphery of the coupling body member (81; 181) and/or that it has at least two support projections (146), which are movement-coupled or firmly connected to the actuating gripping part or parts (17; 117).

6. Load carrier coupling according to any of the preceding claims, **characterised in that** it has a lever (32) for tensioning the actuating gripping part (17; 117) in the gripping position (K) and/or a gearing, in particular a lever gearing or a roller gearing, for transmitting a movement of the actuating gripping part (17; 117) between the gripping position (K) and the open position (O) on to the support projection or projections (46; 146).

7. Load carrier coupling according to any of the preceding claims, **characterised in that** it has an adjusting device (60) for adjusting a clearance of the support projection or projections (46; 146) from the coupling body member (81; 181) in the gripping position (K) of the actuating gripping part (17; 117).

8. Load carrier coupling according to any of the preceding claims, **characterised in that** the support projection or projections (46; 146) engages or engage behind or beneath a mating contour (90) provided on the coupling body member (81; 181) below the coupling body (83) in such a way that the coupling body (83) in the support position (S) of the support projection or projections (46; 146) is tensioned between the support projection or projections (46; 146) and a counter-bearing contour (18) connected in particular firmly to the coupling base (11; 111).

9. Load carrier coupling according to any of the preceding claims, **characterised in that** the actuating gripping part (17; 117) has a gripping contour (19) for contact with the coupling body (83) and for gripping the coupling body (83).

10. Load carrier coupling according to any of the preceding claims, **characterised in that** there is provided on the support projection or projections (46; 146) at least one interlocking contour (49; 149) for a form-fitting hold on a mating interlocking contour (50; 150) provided on the coupling member.

11. Load carrier coupling according to any of the preceding claims, **characterised in that** the interlocking contours (49; 149) and the assigned mating interlocking contour (50; 150) form or comprise a pairing of hook and hook holder and/or spherical surface and spherical dome (51) and/or plug-in projection and plug-in socket.

12. Load carrier coupling according to any of the preceding claims, **characterised in that** the mating interlocking contour (50; 150) is provided on a mounting (70) fitted releasably to the coupling body member (81; 181).

13. Mounting (70) with at least one mating interlocking contour (50; 150) for interaction with a load carrier coupling (10; 110) according to any of claims 1 to 10, wherein the mounting (70) may be fastened releasably to a coupling body member (81; 181) of a trailer coupling (80; 280; 180).

14. System comprising a load carrier coupling (10; 110) according to any of claims 1 to 12, and a trailer coupling (80; 280; 180), wherein the trailer coupling (80; 280; 180) has a coupling body (83) and a coupling body member (81; 181), wherein on the coupling body member (81; 181) at least one support contour, in particular a mating interlocking contour (50; 150) for interaction with the load carrier coupling (10; 110), is provided.

15. Load carrier with a load carrier coupling (10; 110) according to any of claims 1 to 12.

## Revendications

1. Couplage de support de charge (10 ; 110) pour un support de charge (T), pour la fixation détachable à un corps d'attelage (83), en particulier à une boule d'attelage (85), d'un attelage (80 ; 280 ; 180) d'un véhicule automobile (F), avec une base de couplage (11 ; 111) et un dispositif de serrage (65 ; 165) qui comporte au moins deux parties de serrage pour le serrage du corps d'attelage (83), dont au moins une forme une partie de serrage et de réglage (17 ; 117) qui est mobile avec un élément d'actionnement (31) présentant en particulier une poignée (33) entre une position ouverte (O) prévue pour l'introduction du corps d'attelage dans un espace de réception (16) délimité par au moins l'une des parties de serrage (20 ; 120) et plus éloignée de l'au moins une autre des parties de serrage (20; 120) et une position de serrage (K) serrant le corps d'attelage dans l'espace de réception (16), le couplage de support de charge (10 ; 110) présentant au moins une saillie d'appui (46 ; 146) pour l'appui contre un support de corps d'attelage (81 ; 181) portant le corps d'attelage (83), l'au moins une saillie d'appui (46 ; 146) étant couplée en déplacement ou reliée fixement à l'au moins une partie de serrage et de réglage (17 ; 117) de telle manière que la partie de serrage et de réglage (17 ; 117) règle l'au moins une saillie d'appui (46 ; 146) lors de son actionnement dans la position de serrage (K) dans une position d'appui (S), dans laquelle la saillie d'appui (46 ; 146) s'appuie contre le support de corps d'attelage (81 ; 181), et lors d'un actionnement dans la position ouverte (O) dans une position de détachement (L), dans laquelle l'au moins une saillie d'appui (46 ; 146) est déplacée du support de corps d'attelage (81 ; 181) de sorte que le couplage de support de charge (10 ; 110) puisse être retiré de l'attelage (80 ; 280 ; 180), **caractérisé en ce que** l'au moins une saillie d'appui (46 ; 146) présente une longueur réalisée pour l'appui contre le support de corps d'attelage (81 ; 181) sous une section (88) cylindrique normalisée, la section (88) portant le corps d'attelage (83) configuré comme boule d'attelage (85).

2. Couplage de support de charge selon la revendication 1, **caractérisé en ce que** la base de couplage (11 ; 111) comporte un boîtier (15 ; 115), sur lequel l'au moins une partie de serrage et de réglage (17 ; 117) du couplage de support de charge (10 ; 110) est logée de manière mobile et qui présente un espace de réception (16) pour le corps d'attelage (83).

3. Couplage de support de charge selon la revendication 1 ou 2, **caractérisé en ce qu'**au moins une partie de serrage (20 ; 120) est agencée fixement sur le boîtier (15 ; 115) ou **en ce que** le boîtier (15 ; 115) forme une partie de serrage (20 ; 120).

4. Couplage de support de charge selon l'une quelconque des revendications précédentes, **caractérisé en ce que** la base de couplage (11 ; 111) comporte au moins une partie de serrage (20 ; 120) qui est immobile par rapport à la base de couplage (11 ; 111) et présente une saillie d'appui (47) pour l'appui contre le support de corps d'attelage (81 ; 181).

5. Couplage de support de charge selon l'une quelconque des revendications précédentes, **caractérisé en ce qu'**il présente au moins trois saillies d'appui (46, 47 ; 146) agencées à une distance angulaire les unes des autres pour l'appui contre une périphérie extérieure du support de corps d'attelage (81 ; 181) et/ou **en ce qu'**il présente au moins deux saillies d'appui (146) qui sont couplées en déplacement ou fixement reliées à l'au moins une partie de serrage et de réglage (17 ; 117).

6. Couplage de support de charge selon l'une quelconque des revendications précédentes, **caractérisé en ce qu'**il présente un levier (32) pour le serrage de la partie de serrage et de réglage (17 ; 117) dans la position de serrage (K) et/ou un engrenage, en particulier un engrenage à levier ou un engrenage à rouleau, pour la transmission d'un mouvement de la partie de serrage et de réglage (17 ; 117) entre la position de serrage (K) et la position ouverte (O) à l'au moins une saillie d'appui (46 ; 146).

7. Couplage de support de charge selon l'une quelconque des revendications précédentes, **caractérisé en ce qu'**il présente un dispositif de réglage (60) pour le réglage d'une distance entre l'au moins une saillie d'appui (46; 146) et le support de corps d'attelage (81 ; 181) dans la position de serrage (K) de la partie de serrage et de réglage (17 ; 117).

8. Couplage de support de charge selon l'une quelconque des revendications précédentes, **caractérisé en ce que** l'au moins une saillie d'appui (46 ; 146) vient en prise derrière ou sous un contour antagoniste (90) agencé sur le support de corps d'attelage (81 ; 181) sous le corps d'attelage (83) de telle manière que le corps d'attelage (83) soit serré dans la position d'appui (S) de l'au moins une saillie d'appui (46 ; 146) entre l'au moins une saillie d'appui (46 ; 146) et un contour de contre-palier (18) relié fixement en particulier à la base d'attelage (11 ; 111).

9. Couplage de support de charge selon l'une quelconque des revendications précédentes, **caractérisé en ce que** la partie de serrage et de réglage (17 ; 117) présente un contour de serrage (19) pour le contact avec le corps d'attelage (83) et pour le serrage du corps d'attelage (83).

10. Couplage de support de charge selon l'une quelconque des revendications précédentes, **caractérisé en ce que** sur l'au moins une saillie d'appui (46 ; 146), au moins un contour à complémentarité de formes (49 ; 149) est agencé pour le maintien à complémentarité de formes sur un contour à complémentarité de formes antagoniste (50; 150) agencé sur le support d'attelage.

11. Couplage de support de charge selon l'une quelconque des revendications précédentes, **caractérisé en ce que** l'au moins un contour à complémentarité de formes (49; 149) et le contour à complémentarité de formes antagoniste (50 ; 150) associé forment ou comportent un appariement de crochet et logement de crochet et/ou une surface sphérique et une calotte sphérique (51) et/ou une saillie d'enfichage et un logement d'enfichage.

12. Couplage de support de charge selon l'une quelconque des revendications précédentes, **caractérisé en ce que** le contour à complémentarité de formes antagoniste (50 ; 150) est agencé sur un support (70) agencé de manière détachable sur le support de corps d'attelage (81 ; 181).

13. Support (70) avec au moins un contour à complémentarité de formes antagoniste (50; 150) pour la coopération avec un couplage de support de charge (10 ; 110) selon l'une quelconque des revendications 1 à 10, le support (70) pouvant être fixé de manière détachable sur un support de corps d'attelage (81 ; 181) d'un attelage (80 ; 280 ; 180).

14. Système comprenant un couplage de support de charge (10 ; 110) selon l'une quelconque des revendications 1 à 12 et un attelage (80 ; 280 ; 180), l'attelage (80; 280; 180) présentant un corps d'attelage (83) et un support de corps d'attelage (81 ; 181), au moins un contour d'appui, en particulier un contour à complémentarité de formes antagoniste (50 ; 150) étant présent sur le support de corps d'attelage (81 ; 181) pour la coopération avec le couplage de support de charge (10 ; 110).

15. Support de charge avec un couplage de support de charge (10 ; 110) selon l'une quelconque des revendications 1 à 12.
